**Europäisches Patentamt**

**European Patent Office**

**Office européen des brevets**

(19)

(11) Veröffentlichungsnummer: **0 195 931**
**B1**

(12)

# EUROPÄISCHE PATENTSCHRIFT

(45) Veröffentlichungstag der Patentschrift:
12.10.88

(21) Anmeldenummer: 86102145.9

(22) Anmeldetag: 19.02.86

(51) Int. Cl.⁴: **C 09 D 3/80, C 08 L 25/14**

(54) **Wasserverdünnbare Überzugsmittel zur Herstellung von Basisschichten bei Zweischichtlackierung.**

(30) Priorität: 27.02.85 AT 571/85

(43) Veröffentlichungstag der Anmeldung:
01.10.86 Patentblatt 86/40

(45) Bekanntmachung des Hinweises auf die Patenterteilung:
12.10.88 Patentblatt 88/41

(84) Benannte Vertragsstaaten:
BE CH DE FR GB IT LI NL SE

(56) Entgegenhaltungen:
EP-A-0 029 597
EP-A-0 071 071
US-A-3 862 071

(73) Patentinhaber: Vianova Kunstharz
Aktiengesellschaft, A-8402 Werndorf (AT)

(72) Erfinder: Wilfinger, Werner, Dr., Händelstrasse 52,
A-8010 Graz (AT)
Erfinder: Zima, Herbert, Dr., Eichenweg 7, A-8042
Graz (AT)
Erfinder: Stania, Herbert, Warenhauserstrasse 30
g, A-8073 Feldkirchen (AT)

(74) Vertreter: Majcen, Hildegard, Dr., Vianova
Kunstharz AG Patentabteilung Leechgasse 21
Postfach 191, A-8011 Graz (AT)

**0 195 931**

**Beschreibung**

Die Erfindung betrifft wasserverdünnbare Überzugsmittel zur Verwendung in Pigmente sowie gegebenenfalls Füllstoffe, organische Hilfslösemittel und übliche Hilfsstoffe enthaltenden Basisschichten ("base coats") von Zweischicht-Decklackierungen, insbesonders in Metallpigmente enthaltenden Basisschichten, auf der Basis von Acrylatcopolymeren.

Bei der Automobillackierung, aber auch in anderen Bereichen, in denen man Überzüge mit guter dekorativer Wirkung und gleichzeitig einen guten Korrosionsschutz wünscht, ist es üblich, Substrate mit mehreren, übereinander angeordneten Überzugsschichten zu versehen.

In neuerer Zeit verden Decklackierungen in zwei getrennten Arbeitsgängen appliziert. Hierbei wird zunächst ein pigmentiertes Überzugsmittel (Basisschicht) und anschließend eine transparente Deckschicht, d. h. in der Regel ein Klarlack, der keine oder nur transparente Pigmente enthält, aufgebracht. Zur Erzielung eines sogenannten "metallic"-Effektes des Decklackes werden in der Basisschicht metallische Pigmente vervendet.

In der industriellen Praxis der Automobillackierung werden derzeit für diesen Zweck Überzugsmittel verwendet, die einen hohen Gehalt an organischen Lösemitteln enthalten. Aus wirtschaftlichen Gründen und zur Verringerung der Umweltbelastung ist man seit vielen Jahren bemüht, diese organischen Lösemittel in den Überzugsmitteln so weit wie möglich zu verringern. Es sind daher Überzugsmittel bekannt geworden, die als Löse- oder Dispergiermittel überwiegend Wasser enthalten und in denen organische Lösemittel nur noch in geringen Mengen enthalten sind.

So wird in der US-3 862 071 ein wasserverdünnbares Bindemittelsystem für Metallic-Lacke aus einem wasserlöslichen Acrylcopolymerisat und Hexamethoxymethylmelamin beschrieben, welches durch unvollständige Neutralisation mit Aminen in einer dispersoiden Form vorliegt. Eine wesentliche Eigenschaft von Metallic-Lackbindemitteln, nämlich die Fixierung der Metallpigmentteilchen in einer für den optischen Aspekt günstigen Lage, wird in diesem Fall durch Zusatz eines wasserunlöslichen Copolymerisats erreicht.

Gemäß GB-2 073 609 wird dieser Effekt in einer Basisschicht für eine Zweischichtlackierung durch Vervendung intern vernetzter Copolymerdispersionen ("Mikrogele") erhalten.

Auch gemäß EP-A1-0 029 597 wird der gewünschte Effekt durch einen teilweise dispersoiden Charakter des wasserlöslichen Acrylatcopolymeren erreicht, wobei dieser durch ein abgestimmtes Verhältnis zwischen den Hydroxyl- und Carboxylgruppen bedingt ist.

In anderen Fällen wird versucht, die Eigenschaften der Basisschicht durch Mitverwendung von Polyurethandispersionen (DE-3 210 051) oder Einbau von Celluloseestern (DE-3 216 549) zu erreichen.

Allen oben erwähnten Zubereitungen haftet der wesentliche Nachteil an, daß die darin enthaltenen Bindemittel mischungen ihre rheologischen Eigenschaften, welche zur Orientierung und Fixierung der stark anisotropen Metallpigmentblättchen im Interesse eines optisch günstigen Metalleffektes erforderlich sind, durch die dispersoiden Bindemittelanteile und zusätzliche rheologiebeeinflussende Komponenten, wie Thixotropiermittel oder Füllstoffe erhalten.

Diese Maßnahmen sind jedoch entweder mit Beeinträchtigungen in bezug auf die Lagerbeständigkeit der Zubereitungen bzw. der Applizierbarkeit, insbesonders auf elektrostatischen Hochrotationszerstäuberanlagen, oder in bezug auf die Wetterfestigkeit der Lackfilme verbunden. Überraschenderweise wurde nun gefunden, daß man wasserverdünnbare Zubereitungen für Basisschichten auf Acrylatbasis, insbesonders für Metalleffektlacke erhält, welche die Nachteile der bekannten Produkte nicht aufweisen, wenn für die Formulierung der Zubereitungen neben den ausgewählten Bindemitteln spezifische Lösemittelkombinationen herangezogen werden.

Die Erfindung betrifft demgemäß wasserverdünnbare Überzugsmittel zur Verwendung in Pigmente sowie gegebenenfalls Füllstoffe, organische Hilfslösemittel und übliche Hilfsstoffe enthaltenden Basisschichten ("base coats") von Zweischicht-Decklackierungen, insbesonders in Metallpigmente enthaltenden Basisschichten, auf der Basis von Acrylatcopolymeren, welche dadurch gekennzeichnet sind, daß die Basisschicht besteht aus

(A) 10 bis 40 Gew.-%, vorzugsweise 15 bis 30 Gew.-%, mindestens eines nach einem Verfahren der Lösungspolymerisation hergestellten und nach zumindest teilweiser Neutralisation mit einem Amin, vorzugsweise einem tertiären Alkanolamin, wasserverdünnbaren Copolymerisats mit einer Glasübergangstemperatur zwischen -55°C und +25°C, vorzugsweise zwischen -50°C und 0°C, und welches aufgebaut ist aus

(Aa) 40 bis 60 Gew.-% Vinyl- oder Vinylidenverbindungen, welche außer der $\alpha,\beta$-ethylenischen Doppelbindung keine weiteren funktionellen Gruppen aufweisen,

(Ab) 30 bis 40 Gew.-% von $C_2$- bis $C_4$-Hydroxyalkylestern der (Meth)acrylsäure, und/oder
(Ac) N-Methylol(meth)acrylsäureamid, sowie
(Ad) 2 bis 17 Gew.-% (Meth)acrylsäureamid,
(Ae) 0 bis 8 Gew.-% von alkoxymethyliertem N-Methylol-(meth)acrylsäureamid,
(Af) 2 bis 8 Gew.-% $\alpha,\beta$-ethylenisch ungesättigter Monocarbonsäuren, vorzugsweise (Meth)acrylsäure und
(Ag) 0 bis 0,8 Gew.-% einer di-$\alpha,\beta$-ungesättigten Verbindung, vorzugsweise Divinylbenzol,

mit der Maßgabe, daß eine 60 gew.-%-ige Lösung des Copolymerisats in Ethanol nach Neutralisation der Carboxylgruppen mit Ammoniak bis zum Erreichen eines pH-Wertes von 7,2 bis 7,5 (gemessen in 20-%-iger

2

wäßriger Lösung) mit Wasser klar oder nur mit leichter Trübung bis zu einem Festkörpergehalt von 20 % verdünnbar ist, und die Lösung beim Verdünnen mit Wasser bei einem Festkörper von 25 bis 40 % ein Viskositätsmaximum von mehr als 5 Pa.s aufweist,

(B) 5 bis 40    Gew.-%, vorzugsweise 15 bis 35 Gew.-% eines Gemisches aus

(Ba) 20 bis 80   Gew.-% einem oder mehreren Lösemitteln mit einer Verdunstungszahl (nach DIN 53170) von weniger als 30 und

(Bb) 20 bis 80   Gew.-% einem oder mehreren bei Normaltemperatur vollständig mit Wasser mischbaren jedoch mit einem Benzinkohlenwasserstofflösemittel mit einem Siedebereich von 80 bis 110°C und einem Aromatengehalt von maximal 5 % nicht mischbaren Lösemittel welches eine Verdunstungszahl von über 60 aufweist,

(C) 1 bis 30    Gew.-% einer oder mehrerer farb- und/oder effektgebenden Komponenten,

(D) 0 bis 20    Gew.-%, vorzugsweise 5 bis 15 Gew.-% einer oder mehrerer im Milieu der Lackpräparation stabilen Dispersion auf Basis von Vinylpolymeren, Polykondensaten oder Polyadditionsharzen und

(E) 0 bis 20    Gew.-%, vorzugsweise 3 bis 12 Gew.-% eines oder mehrerer teilweise oder vollständig veretherter Amino-Formaldehyd-Kondensate.

Die Erfindung betrifft weiterhin die Verwendung der gemäß Hauptanspruch gekennzeichneten Zubereitungen als Basisschichten für Zweischicht-Decklackierungen, insbesonders für Metalleffektlacke.

Die erfindungsgemäßen Zubereitungen ergeben insbesondere bei Verwendung von metallischen Pigmenten Überzüge mit einem besonders guten Metall-Effekt, da sie zu einer sehr günstigen Anordnung und Fixierung der metallischen Pigmente im Lackfilm führen. Aber auch bei Verwendung konventioneller, nicht metallischer Pigmente ergeben sich Überzüge mit ausgezeichneter dekorativer Wirkung. Ein besonderer Vorteil der Überzugsmittel liegt darin, daß sie beim Aufbringen einer weiteren Überzugsschicht auf den vorgetrockneten aber noch nicht eingebrannten Film nur ein sehr geringes oder kein Anlösen zeigen.

Im einzelnen bestehen die erfindungsgemaßen Basisschichten aus den folgenden Komponenten und spezifischen Materialien:

Die Komponente (A) stellt ein in bekannter Weise nach einem Verfahren der Lösungspolymerisation hergestelltes Polymerisat dar. Anspruchsgemäß weist das Polymerisat eine Glasübergangstemperatur (Tg) zwischen -55°C und +25°C. Bevorzugt werden Polymerisate mit einer Glasübergangstemperatur zwischen -50°C und 0°C.

Eine angenäherte Berechnung der Glasübergangstemperatur aus der Glasübergangstemperatur der Homopolymeren der eingesetzten Monomeren kann nach folgender Formel erfolgen:

$$\frac{1}{Tg} = \sum_{i=1}^{i} \frac{K_i}{Tg_i}$$

Tg  = Glasübergangstemperatur des Copolymeren in °K
$Tg_i$ = Glasübergangstemperatur des Homopolymerisates des Monomeren i in °K
$K_i$   = Anteil des Monomeren i im Copolymeren in Gew.-%

Für den Aufbau der Copolymerisate (Komponente A) werden folgende Gruppen von Monomeren eingesetzt.

40 bis 60 % der Monomerbausteine sind Vinyl- oder Vinylidenmonomere, welche außer der $\alpha,\beta$-ethylenischen Doppelbindung keine funktionelle Gruppe tragen (Gruppe A). Dazu zählen die $C_1$- bis $C_{12}$-Alkanolester der Acryl- bzw. Methacrylsäure und aromatische Monomere wie Styrol, Vinyltoluol, p-tert.Butylstyrol u.ä.

Ein weiterer Bestandteil der Komponente (A) sind 30 bis 40 Gew.-% $C_2$ bis $C_4$-Hydroxyalkylester der Acryl- oder Methacrylsäure (Gruppe Ab). Bevorzugt werden Hydroxyethyl(meth)acrylat und 2-Hydroxypropyl-(meth)-acrylat eingesetzt. Diese Gruppe kann, vorteilhafterweise nur teilweise, durch N-Methylol(meth)acrylsäureamid (Gruppe Ac) ersetzt werden.

Als weitere Gruppen werden 2 bis 17 Gew.-% (Meth)acrylsäureamid (Gruppe Ad) und 0 bis 8 Gew.-% $C_1$- bis $C_4$-alkoxylierte (Meth)acrylsäureamide (Ae) eingesetzt.

Die für die nach zumindest teilweiser Neutralisation gegebene Wasserlöslichkeit notwendigen Carboxylgruppen werden durch die Verwendung von 2 bis 8 Gew.-% von $\alpha,\beta$-ethylenisch ungesättigten Carbonsäuren, insbesonders Acryl- oder Methacrylsäure eingeführt (Af).

Gegebenenfalls kann die Monomerenzusammensetzung überdies bis zu 0,8 Gew.-%, bezogen auf die Gesamtmonomeren, einer mehrfach-$\alpha,\beta$-ethylenisch ungesättigten Verbindung enthalten. Als solche kommt vorzugsweise Divinylbenzol zum Einsatz. Weitere Verbindungen dieser Art sind Di- oder Triacrylate, wie Ethylenglykoldimethacrylat oder Propantrioltrimethacrylat.

Die Mengenverhältnisse werden innerhalb des angegebenen Rahmens so gewählt, daß die Copolymerisate nach Neutralisation der 60 gew.-%-igen Lösung mit Ammoniak bis zu einem pH-Wert von 7,2 bis 7,5 beim Verdünnen mit Wasser eine klare oder höchstens leicht trübe 20 gew.-%-ige Lösung ergeben. Die Bestimmung des pH-Wertes erfolgt in der 20-%-igen wäßrigen Lösung. Es ist für die erfindungsgemäßen Harze der

3

## 0 195 931

Komponente (A) wesentlich, daß ihre Löslichkeitseigenschaften auch bei Verwendung von mehrfunktionellen Monomeren der Gruppe (Ag) erhalten bleiben.

Ein weiteres Kriterium der Copolymerisate liegt in ihrem Viskositätsverhalten. Bei richtiger Auswahl des Verhältnisses zwischen den ionischen Gruppierungen und den übrigen Monomeren zeigen die erfindungsgemäß einsetzbaren Polymerisate beim Verdünnen mit Wasser nach Einstellung des pH-Wertes mit Ammoniak auf 7,2 bis 7,5 einen starken Viskositätsanstieg, welcher bei einem Festkörpergehalt zwischen 25 und 40 % ein Maximum von mehr als 5 Pa.s aufweisen muß.

Wesentlich für die vorliegende Erfindung ist das im Anspruch als Komponente (B) angeführte Lösemittelgemisch, welches einen Anteil von 10 bis 40 Gew.-% der Zubereitung darstellt. Vorzugsweise werden 20 bis 35 Gew.-% des Lösesmittelgemisches eingesetzt.

Dieses Lösemittelgemisch besteht aus jeweils 20 bis 80 Gew.-% eines oder mehrerer Lösemittel mit einer Verdunstungszahl (nach DIN 53 170) von weniger als 30 (Gruppe Ba) bzw. einem oder mehreren Lösemitteln mit einer Verdunstungszahl von über 60 (Gruppe Bb), wobei die Lösemittel der Gruppe (Bb) bei Normaltemperatur vollständig mit Wasser mischbar sind, jedoch mit einem spezifizierten Benzinkohlenwasserstoff nicht mischbar sind. Der Benzinkohlenwasserstoff ist durch einen Siedebereich von 80 bis 110°C, sowie durch einen Aromatengehalt von maximal 5 Gew.-% spezifiziert.

Zur Gruppe (Ba) gehören Lösemittel wie Methanol, Ethanol, Propanol, Aceton, Dioxan, Propylenglykolmonomethylether. Bevorzugtes Lösemittel dieser Gruppe ist Ethanol. Die Lösemittel dieser Gruppe können zur Gänze oder teilweise als Polymerisationsmedium für die Komponente (A) dienen.

Zur Gruppe (Bb) gehören beispielsweise Glykole und Glykolether wie Ethylenglykol, Diethylenglykol, Diethylenglykolmonomethyl- bzw. -ethylether. Ein besonders bevorzugtes Lösemittel ist N-Methylpyrrolidon.

Die Nichtmischbarkeit dieser Lösemittel wird durch Mischen bei Raumtemperatur von gleichen Teilen des Lösemittels mit dem spezifizierten Benzinkohlenwasserstoff geprüft und äußert sich durch eine relativ rasche Ausbildung von zwei getrenten Phasen.

Als farbgebende bzw. effektgebende Komponente (C), welche 1 bis 30 Gew.-% der Zubereitung beträgt, können je nach Einsatzzweck die für Uni-Lackierung oder für Effektlackierung üblichen und bekannten anorganischer oder organischen Pigmente oder Farbstoffe bzw. Metallpigmente bzw. Kombinationen dieser Produkte eingesetzt werden.

Als Farbstoffe bzw. Pigmente werden beispielsweise Titandioxid, Graphit, Ruß, Zinkchromat, Strontiumchromat, Bariumchromat, Bleichromat, Bleicyanamid, Bleisilicochromat, Zinkoxid, Cadmiumsulfid, Chromoxid, Zinksulfid, Nickeltitangelb, Chromtitangelb, Eisenoxidrot, Eisenoxidschwarz, Ultramarinblau, Phthalocyaninkomplexe, Naphtholrot, Chinacridone, halogenierte Thioindigo-Pigmente eingesetzt.

Als besonders bevorzugte Pigmente werden Metallpigmente einzeln oder im Gemisch, wie Kupfer, Kupferlegierungen, Aluminium und Stahl, vorzugsweise Aluminium in wenigstens überwiegendem Anteil, verwendet, und zwar in einer Menge von 0,5 bis 25 Gew.-% bezogen auf den gesamten Festkörpergehalt der Überzugsmittel an Bindemitteln. Bei Mischungen aus einem oder mehreren der obengenannten nichtmetallischen Pigmente bzw. Farbstoffe mit Metallpigmenten werden die Anteile so gewählt, daß der erwünschte Metall-Effect nicht unterdrückt wird.

Zur Erzielung günstiger Eigenschaften bezüglich der Applizierbarkeit (Spritzbarkeit) und einer rascheren Antrocknung der Basisschicht durch physikalische Trocknung konnen die Zubereitungen überdies bis zu 20 % einer oder eine Mischung verschiedener wäßriger Polymerdispersionen enthalten (Komponente D). Diese Dispersionen, welche auf Basis von Polymerisaten, Polykondensaten oder Polyadditionsharzen aufgebaut sein können, müssen selbstverständlich im Milieu der Gesamtzubereitung stabil sein. Dies gilt insbesonders in bezug auf den pH-Wert, die vorhandenen Lösemittel und die Pigmente bzw. Füllstoffe. Bevorzugte Dispersionen sind Poly(meth)acrylate oder Styrol-Acrylat-Copolymerdispersionen, wie sie im Handel in großer Zahl zur Verfügung stehen. Weiters sind auch Dispersionen auf Basis von Polyestern und in manchen Fällen besonders günstig Polyurethandispersionen einsetzbar. Ein bevorzugter Mengenbereich für alle Dispersionen liegt bei 5 bis 15 Gew.-% der Zubereitung.

Zur Vernetzung der Filme enthalten die Zubereitungen, soferne sie nicht im ausreichenden Maße selbstvernetzende Eigenschaften aufweisen, bis zu 20 Gew.-% eines Amino-Formaldehyd-Kondensates (Komponente E). Der bevorzugte Bereich für diese Komponente liegt zwischen 3 und 12 Gew.-% bezogen auf die gesamte Zubereitung. Bevorzugt werden wasserlösliche oder wasserverträgliche Melamin-Formaldehyd-Kondensate, deren Methylolgruppen teilweise oder vollständig mit Methanol verethert sind, eingesetzt.

Bei der Herstellung der Überzugsmittel wird das Copolymerisat (A), welches in Lösung, vorzugsweise in Ethanol vorliegt mit einem Amin, vorzugsweise einem tertiären Alkanolamin, wie Dimethyl- oder Diethylethanolamin auf einem pH-Wert von 7,0 bis 7,5 neutralisiert.

Mit einem Teil der neutralisierten Komponente (A) werden auf entsprechenden Dispergiergeräten wie Sand-, Perl- oder Kugelmühlen mit den Pigmenten bzw. Füllstoffen Farbpasten hergestellt. Bei Bedarf können dabei auch Anteile Wasser und/oder des Lösungsmittels der Komponente (B) oder des Aminoharzes (Komponente E) mitverwendet werden. Überdies können auch übliche Dispergier- oder Netzmittel zur Anwendung kommen. Metallpigmente werden zweckmäßig vor der Einarbeitung in das Bindemittel mit einem Teil der Lösemittelkomponente (B) vordispergiert.

Die so erhaltenen Pigmentzubereitungen werden mit restlichem Polymerisat (A) und Aminoharz (E) aufgelackt und mit restlichem Lösungsmittel(gemisch) (B) und Wasser vorverdünnt. Danach wird gegebenenfalls die Dispersion (D) zugesetzt und der pH-Wert auf 6,5 - 9, vorzugsweise 7,0 bis 8,0 eingestellt.

4

Weiterhin werden der Festkörpergehalt und die Viskosität auf die den jeweiligen Applikationsbedingungen angepaßten Werte eingestellt.

Die gebrauchsfertigen Überzugsmittel weisen in der Regel einen Festkörpergehalt von 10 bis 30 Gew.-% auf, und ihre Auslaufzeit nach DIN 53211/20°C beträgt 13 bis 25 Sekunden, vorzugsweise 15 bis 18 Sekunden. Ihr Wasseranteil beträgt 50 bis 80 Gew.-%, der an organischen Lösungsmitteln 10 bis 40 Gew.-%, jeweils bezogen auf das gesamte Überzugsmittel.

Die erfindungsgemäßen Überzugsmittel können auch weitere übliche Zusätze wie Verdickungsmittel, Füllstoffe, Weichmacher, Stabilisatoren, Lichtschutzmittel, Netzmittel, Dispergierhilfsmittel, Verlaufmittel, Wachse, Entschäumer und Katalysatoren einzeln oder im Gemisch in den üblichen Mengen enthalten. Diese Substanzen können den Einzelkomponenten und/oder der Gesamtmischung zugesetzt werden. Der Zusatz anderer in der Lackindustrie üblichen Lösemittel darf selbstverständlich nur in einem Ausmaß erfolgen, daß die rheologische Charakteristik des Überzugsmittels nicht beeinträchtigt wird.

Die Applikation erfolgt mit den praxisüblichen Vorrichtungen, wobei im Falle von Metalleffekt-Basislacken bei Verwendung des Luftspritzverfahrens ein besonders gleichmäßiger und heller Effekt erzielt wird. Jedoch können auch rein elektrostatische oder luftunterstützte elektrostatische Auftragsverfahren oder Kombinationen dieser Verfahren zur Anwendung kommen. Die erfindungsgemäßen Überzugsmittel zeichnen sich durch eine sehr gute Applizierbarkeit beim Spritzauftrag aus. Die günstigen Eigenschaften werden vor allem durch das rheologische Verhalten der Polymerisationskomponente (A) im wäßrigen Milieu bewirkt, welches durch das ausgewählte Lösemittelsystem (B) noch verstärkt wird.

Nach einer Ablüftzeit von 5 - 10 Minuten bei Raumtemperatur kann naß-auf-naß mit einem transparenten Überzugslack überlackiert werden. In bestimmten Fällen, z. B. falls eine Verkürzung der Ablüftzeit gewünscht wird, oder im Falle einer sehr hohen Luftfeuchtigkeit, empfiehlt sich das Einschalten einer Warmblaszone vor dem Auftrag des transparenten Überzugslackes.

Als transparente Überzugslacke kommen konventionelle Lösungsmittelhaltige, Vasserverdünnbare oder Pulver-Lacke in Frage. In besonderer Weise eignen sich dafür 2-Komponenten-Klarlacke auf Basis von Acryl- und/oder Polyesterharzen, welche mit Polyisocyanaten, gehärtet werden, oder 1-Komponenten-Klarlacke auf Acrylharz-Melaminharz-Basis. Der Mehrschichtüberzug wird dann gemäß den Anforderungen des Überzugs-Klarlackes bei der erforderlichen Temperatur ausgehärtet.

Die folgenden Beispiele erläutern die Erfindung, ohne sie zu beschränken. Alle Angaben in Teilen oder Prozenten beziehen sich, soferne nichts anderes angegeben ist, auf Gewichtseinheiten. Die mit R bezeichneten Produkte sind Warenzeichen der jeweils angegebenen Firmen.

**Herstellung bzw. Kennzeichnung der in den Beispielen eingesetzten Komponenten und Hilfsstoffen**

(1) Herstellung der Copolymeren (Komponente A)

Die Mengenangaben für die Ausgangsmaterialien und Kennzahlen dieser Komponente sind in der Tabelle 1 zusammengefaßt. Die Herstellung erfolgt nach den üblichen Methoden der Lösungspolymerisation. Dabei wird ein Teil des als Polymerisationsmedium dienenden Lösemittels in einem mit Rührer, Rückflußkühler, Thermometer und Zugabegefäß ausgestatteten Reaktionsgefäß vorgelegt. Bei Rückflußtemperatur wird die Mischung der Monomeren, des restlichen Lösemittels sowie Initiator und Regler innerhalb von 4 Stunden aus dem Zugabegefäß gleichmäßig zugegeben. Nach weiteren 3 Stunden Reaktionszeit wird weiterer Initiator zugegeben. Nach weiteren 2 Stunden Reaktionszeit wird ein Teil des Lösemittels abdestilliert.

(2) Zusammensetzung und Kennzeichnung der farb- und/oder effektgebenden Komponente (c)

Als Komponente (C) werden in den Beispielen folgende Pigmentzubereitungen eingesetzt:

(C1)   43,25   Tle Aluminiumpaste (1)
       56,18   Tle Propylenglykolmonomethylether
        0,57   Tle anionisches Netzmittel (2)
       ‾‾‾‾‾‾
      100,00

(1) Aluminiumpaste Typ 4 gemäß ISO R 1247 ca. 68-%-ig an 99,99-%-igem Aluminium, Teilchengröße unter 44 μm, mit speziellen Emulgatoren und Stabilisatoren für den Einsatz in Wasserlacken (Handelsname ®TOYO 8160 SE, Toyo Aluminium KK, Japan)

(2) Hochmolekulare, ungesättigte Polycarbonsäure kombiniert mit lackverträglichem Siliconharz (Wirksubstanz 50 %, klare gelbe Flüssigkeit, Flammpunkt ca 28°C, Handelsname ®BYK P 104 S, BYK-Mallinckrodt, BRD)

5

# 0 195 931

| (C2) | 24,40 | Tle Copolymer (A3) |
| | 0,90 | Tle Dimethylethanolamin |
| | 8,50 | Tle Propylenglykolmonomethylether |
| | 0,30 | Tle anionisches Netzmittel (siehe C1) |
| | 8,30 | Tle N-Methylpyrrolidon |
| | 57,60 | Tle TiO$_2$ (Rutil-Typ) |
| | 100,00 | |

| (C3) | 26,80 | Tle Copolymer (A3) |
| | 5,30 | Tle Dimethylethanolaminlösung (10-%-ig in H$_2$O) |
| | 61,10 | Tle H$_2$O |
| | 0,30 | Tle anionisches Netzmittel (siehe C1) |
| | 6,50 | Tle ®HOSTAPERMBLAU B3G (HOECHST AG; BRD) |
| | 100,00 | |

(C4)   wie (C3), jedoch als Farbpigment
6,50 Tle Farbruß (®PRINTEX U)

(3) <u>Kennzeichnung der Dispersionskomponente (D)</u>

(D1) Selbstvernetzende, feindisperse Copolymerisatdispersion auf Basis Styrol/Acrylat, Festkörpergehalt: ca. 45 %; pH-Wert (DIN 53785): 3 - 4; Mindestfilmbildetemperatur: 0°C (z. B. ®MOWILITH LDM 7130, HOECHST AG, BRD)

(D2) Wäßrige, einkomponentige aliphatische Polyurethandispersion; Festkörpergehalt: ca. 34 %; pH-Wert (DIN 53785): 7,5 - 8,5; Mindestfilmbildetemperatur: unter 0°C (z. B. ®EO-REZ R-961, Polyvinyl Chemie, NE)

(D3) Mittelviskose, feinteilige Acrylsäureester-copolymer-Dispersion; Festkörpergehalt: ca. 46 %; pH-Wert: 8 - 9; Mindestfilmbildetemperatur: ca. 40°C (z. B. ®MOWILITH LDM 7760, HOECHST AG, BRD)

(4) <u>Kennzeichnung der Aminoharzkomponente (E)</u>

(E1) Handelsübliches wasserlösliches, partiell mit Methanol verethertes Melamin-Formaldehyd-Kondensat; im Mittel ca. 5 - 6 Methylolgruppen, davon verethert ca. 3 - 4; Festkörpergehalt: 62 % Lösemittel, Diethylenglykoldimethylether (z. B. ®RESYDROL WM 501, VIANOVA, AT)

(E2) Handelsübliches Hexamethoxymethylmelamin Festkörpergehalt: ca. 95 % (z. B. ®MAPRENAL VMF 3904, HOECHST AG, BRD)

**Beispiele 1 - 14:**

Die Zusammensetzung und Eigenschaften der Basisschicht-Zubereitungen und der Zweischichtlackierungen sind in der Tabelle 2 zusammengefaßt. Die einzelnen Komponenten werden in der angegebenen Reihenfolge unter gutem Rühren vermischt, falls erforderlich mit Wasser auf eine Auslaufzeit von 15 bis 18 Sekunden (DIN 53211, 20°C) eingestellt und durch Spritzen auf gereinigten Stahlblechen bzw. im Aufbau auf K-ETL-Grundierung / Automobilfüller appliziert. Der Auftrag erfolgte mit einer Luftspritzpistole (Düsendurchmesser 1,2 mm) bei einem Spritzdruck von 6 bis 7 bar in drei Passagen. Vor dem überspritzen mit dem Klarlack wurde die Basisschicht 5 Minuten bei 60°C getrocknet.

Als Deckschicht für die Zweischichtlackierung wurde ein Klarlack folgender Zusammensetzung verwendet:

56,8 Tlen   eines handelsüblichen fremdvernetzenden Acrylharzes (60-%-ig in ®SHELLSOL A/Butylacetat, Viskosität ca. 1000 mPa.s/25°C; Säurezahl 12 - 22 mg KOH/g; z. B. ®VIACRYL SC 341, VIANOVA, AT),

22,9 Tlen   eines mit Isobutanol veretherten Melaminharzes (60-%-ig in Butanol, Viskosität ca. (800 mPa.s/25°C, ®VIAMIN MF 514, VIANOVA, AT),

13,75 Tlen   eines aromatenreichen Kohlenwasserstofflösemittels (Siedebereich 160 - 182°C, Anilinpunkt 15°C, Kauri-Butanol-Wert 90)
und

6,55 Tlen   Butanol.

Die Klarlack wird mit dem obengenannten KW-Lösemittel auf eine Spritzviskosität entsprechend einer Auslaufzeit gemäß DIN 53211/23°C von 22 Sekunden eingestellt.

Nach dem Einbrennen (25 Minuten / 140°C) resultiert eine Trockenfilmstärke von 40 µm.

Die Beispiele 13 und 14 sind Vergleichsbeispiele mit Basisschichten, in denen die Komponente (A) nicht die geforderten Eigenschaften, insbesonders ein entsprechendes Viskositätsverhalten zeigt.

**TAB 1:** <u>Zusammensetzung und Kennwerte der Komponente (A)</u>

| | | A 1 | A 2 | A 3 | A 4 | A 5 | A 6 | A 7 | A 8 | A 9 (V) | A 10 (V) |
|---|---|---|---|---|---|---|---|---|---|---|---|
| Lösemittel (vorgelegt) | | | | | | | | | | | |
| Ehtanol | | 431 | 431 | 431 | 466 | - | 453 | - | 431 | 309 | - |
| Isopropanol | | - | - | - | - | - | - | 553 | - | - | 307 |
| Methoxypropanol | | - | - | - | - | 752 | - | - | - | - | - |
| Zugabemischung: | | | | | | | | | | | |
| (Aa) | Etylacrylat | - | - | - | - | - | - | - | - | - | 425 |
| | Methylmethacrylat | - | - | - | - | - | - | - | - | - | 425 |
| | n-Butylacrylat | - | - | - | - | - | 200 | - | - | - | - |
| | 2-Ethylhexylacrylat | 464,2 | 522 | 556 | 470 | 289 | - | - | 464 | 111 | - |
| | n-Decylmethacrylat | - | - | - | - | - | - | 200 | - | - | - |
| | Styrol | - | - | - | - | 289 | 200 | 200 | - | 111 | - |
| (Ab) | Hygdroxyethylacrylat | 334,6 | 323 | 326 | 170 | 417 | 185 | 185 | 334,6 | 160 | - |
| | Hydroxyethylmethacrylat | - | - | - | - | - | - | - | - | - | 50 |
| | 2-Hydroxypropylmethacrylat | - | - | - | - | - | 185 | 185 | - | - | - |
| (Ac) | N-Methylolmethacrylamid | - | - | - | 165 | - | - | - | - | - | - |
| (Ad) | Methacrylamid | 145,6 | 67,6 | 33,7 | 115 | 105 | 150 | 150 | 145 | 40,5 | - |
| (Ae) | Butoxymethylmeth-acrylamid | - | - | - | - | 88 | - | - | - | 34 | - |
| (Af) | Acrylsäure | 30,2 | 47,3 | 47,8 | 60 | 52 | - | - | 30,2 | 20 | 100 |
| | Methacrylsäure | - | - | - | - | - | 80 | 80 | - | - | - |
| (Ag) | Divinylbenzol | - | - | - | - | - | - | - | 11,7 | - | - |
| Lösemittel (in der Zugabemischung) | | | | | | | | | | | |
| | Ethanol | 333 | 280 | 279 | 302 | - | 333 | - | 333 | 160 | - |
| | Isopropanol | - | - | - | - | - | - | 333 | - | - | 360 |
| | Methoxypropanol | - | - | - | - | 447 | - | - | - | - | - |
| | Azodiisobuttersäure-dinitril (ABDN) | 12,5 | 12,1 | 11,5 | 12,0 | 15,8 | 12,0 | 12,0 | 12,5 | 6,0 | 13,0 |
| | tert-Dodecylmerkaptan | 2,1 | 2,0 | 1,9 | 2,0 | 2,6 | 3,0˙ | 3,0 | - | 1,0 | 2,2 |
| | Nachgabe ABDN | 4,0 | 4,0 | 4,0 | 2,0 | 5,3 | 2,0 | 2,0 | 4 | 2,0 | 2,0 |
| Abdestill. Lösemittel | | 120 | 90 | 70 | - | - | - | - | - | - | - |
| Kennwerte | | | | | | | | | | | |
| | Festkörpergehalt (%) | 60 | 60 | 60˙ | 56 | 51 | 56 | 53 | 50 | 50 | 60 |
| | Tg (berechnet, °C) | -34 | -43 | -48 | -19 | 0 | 22 | 21 | -34 | 0 | 36 |
| | Viskositätsmaximum beim Verdünnen mit Wasser (Festkörpergehalt 25-40%) Pa.s | ◄——————über 5——————————————► | | | | | | | | | x) |
| | Aussehen der 20-%-igen Lösung (pH 7,2-7,5) | KL | LT | KL | LT | KL | LT | LT | KL | T | LT |

x) Beim Verdünnen tritt keine Viskositätserhöhung auf
KL = klar
LT = leicht trüb
T = milchig trüb

**Tabelle 2**

| Komponenten | Beispiel 1 | 2 | 3 | 4 | 5 | 6 | 7 | 8 | 9 | 10 | 11 | 12 | 13 | 14(V) | 15(V) |
|---|---|---|---|---|---|---|---|---|---|---|---|---|---|---|---|
| A 1 | 21,30 | 21,30 | 28,30 | 4,80 | 27,40 | 20,10 | - | - | - | - | - | - | - | - | - |
| A 2 | - | - | - | - | - | - | 21,30 | - | - | - | - | - | - | - | - |
| A 3 | - | - | - | - | - | - | - | 21,50 | - | - | - | - | - | - | - |
| A 4 | - | - | - | - | - | - | - | - | 22,83 | - | - | - | - | - | - |
| A 5 | - | - | - | - | - | - | - | - | - | 25,05 | - | - | - | - | - |
| A 6 | - | - | - | - | - | - | - | - | - | - | 22,83 | - | - | - | - |
| A 7 | - | - | - | - | - | - | - | - | - | - | - | 24,12 | - | - | - |
| A 8 | - | - | - | - | - | - | - | - | - | - | - | - | 25,56 | - | - |
| A 9 | - | - | - | - | - | - | - | - | - | - | - | - | - | 24,10 | - |
| A 10 | - | - | - | - | - | - | - | - | - | - | - | - | - | - | 18,30 |
| E 1 | 8,80 | - | - | 3,90 | - | 8,80 | 8,80 | 8,80 | 8,80 | 8,80 | 8,80 | 8,80 | 8,80 | 8,80 | 8,80 |
| E 2 | - | 5,75 | - | - | - | - | - | - | - | - | - | - | - | - | - |
| Ethnanol | 9,60 | 12,65 | 9,70 | - | 9,40 | 9,60 | 9,60 | 9,40 | 8,07 | 5,85 | 8,07 | 6,78 | 5,34 | 6,80 | 12,60 |
| DMEA | 4,20 | 4,20 | 5,30 | - | 5,10 | 4,00 | 4,20 | 6,00 | 4,20 | 4,20 | 4,20 | 4,20 | 4,20 | 6,00 | 16,80 |
| C 1 | 10,20 | 10,20 | 10,30 | - | 10,00 | 10,20 | 10,20 | 10,20 | 10,20 | 10,20 | 10,20 | 10,20 | 10,20 | 10,20 | 10,20 |
| C 2 | - | - | - | 41,90 | - | - | - | - | - | - | - | - | - | - | - |
| C 3 | - | - | - | - | - | 2,80 | - | - | - | - | - | - | - | - | - |
| C 4 | - | - | - | - | - | 1,50 | - | - | - | - | - | - | - | - | - |
| NMP | 9,60 | 9,60 | 9,70 | - | 9,40 | 9,60 | 9,60 | 9,60 | 9,60 | 9,60 | 9,60 | 9,60 | 9,60 | 9,60 | 9,60 |
| Wasser | 25,90 | 25,90 | 26,20 | 39,00 | 25,30 | 23,00 | 25,90 | 24,10 | 25,90 | 25,90 | 25,90 | 25,90 | 25,90 | 24,10 | 13,30 |
| D 1 | 10,40 | 10,40 | 10,50 | - | - | 10,40 | 10,40 | 10,40 | 10,40 | 10,40 | 10,40 | 10,40 | 10,40 | 10,40 | 10,40 |
| D 2 | - | - | - | - | 13,40 | - | - | - | - | - | - | - | - | - | - |
| D 3 | - | - | - | 10,40 | - | - | - | - | - | - | - | - | - | - | - |
| (I) | K | K | K | K | K | K | K | K | K- | K- | K- | K- | K | V / K- | V / K- |
| (II) | ←————————————KEIN ABLAUFEN————————————→ | | | | | | | | | | | | | G | G |
| (III) | 1 | 1 | 1 | 1 | 1 | 1 | 1 | 1 | 2 | 2 | 2 | 2 | 1 | 3 | 3 |

**Erklärungen.zur Tabelle 2:**

| | | |
|---|---|---|
| (V) | Vergleichsbeispiel | |
| DMEA | Dimethylethanolamin (10-%-ige Lösung in Wasser) | |
| NMP | N-Methylpyrrolidon | |
| (I) | Prüfung der Lagerstabilität der Basislacke (7 Tage bei 50°C) | |
| | K | keine Veränderung |
| | K- | leichte Phasentrennung |
| | V | Vergrauen der Aluminiumpigmentteilchen |
| (II) | Prüfung des Applikationsverhaltens | |
| | G | starkes Ablaufen, "Gardinenbildung" |
| (III) | Beurteilung der eingebrannten 2-Schichtlackierung | |
| | 1 | einwandfreier Effekt, hoher Glanz |
| | 2 | einwandfreier Effekt bei noch zufriedenstellendem Glanz |
| | 3 | wolkiger Effekt, mäßiger Glanz |

**Patentansprüche**

1. Wasserverdünnbare Überzugsmittel zur Verwendung in Pigmente sowie gegebenenfalls Füllstoffe, organische Hilfslösemittel und übliche Hilfsstoffe enthaltenden Basisschichten ("base coats") von Zweischicht-Decklackierungen, insbesonders in Metallpigmente enthaltenden Basisschichten, auf der Basis von Acrylatcopolymeren, _dadurch gekennzeichnet,_ daß die Basisschicht besteht aus

(A) 10 bis 40 Gew.-%, vorzugsweise 15 bis 30 Gew.-%, mindestens eines nach einem Verfahren der Lösungspolymerisation hergestellten und nach zumindest teilweiser Neutralisation mit einem Amin, vorzugsweise einem tertiären Alkanolamin, wasserverdünnbaren Copolymerisats mit einer Glasübergangstemperatur zwischen -55°C und +25°C, vorzugsweise zwischen -50°C und 0°C, und welche aufgebaut ist aus

(Aa) 40 bis 60 Gew.-% Vinyl- oder Vinylidenverbindungen, welche außer der $\alpha,\beta$-ethylenischen Doppelbindung keine weiteren funktionellen Gruppen aufweisen,

(Ab) 30 bis 40 Gew.-% von $C_2$- bis $C_4$-Hydroxyalkylestern der (Meth)acrylsäure, und/oder

(Ac) N-Methylol(meth)acrylsäureamid, sowie

(Ad) 2 bis 17 Gew.-% (Meth)acrylsäureamid,

(Ae) 0 bis 8 Gew.-% von alkoxymethyliertem N-Methylol-(meth)acrylsäureamid,

(Af) 2 bis 8 Gew.-% $\alpha,\beta$-ethylenisch ungesättigter Monocarbonsäuren, vorzugsweise (Meth)acrylsäure und

(Ag) 0 bis 0,8 Gew.-% einer di-$\alpha,\beta$-ungesättigten Verbindung, vorzugsweise Divinylbenzol,

mit der Maßgabe, daß eine 60 gew.-%-ige Lösung des Copolymerisats in Ethanol nach Neutralisation der Carboxylgruppen mit Ammoniak bis zum Erreichen eines pH-Wertes von 7,2 bis 7,5 (gemessen in 20-%-iger wäßriger Lösung) mit Wasser klar oder nur mit leichter Trübung bis zu einem Festkörpergehalt von 20 % verdünnbar ist, und die Lösung beim Verdünnen mit Wasser bei einem Festkörper von 25 bis 40 % ein Viskositätsmaximum von mehr als 5 Pa.s aufweist,

(B) 5 bis 40 Gew.-%, vorzugsweise 15 bis 35 Gew.-% eines Gemisches aus

(Ba) 20 bis 80 Gew.-% einem oder mehreren Lösemitteln mit einer Verdunstungszahl (nach DIN 53 170) von weniger als 30 und

(Bb) 20 bis 80 Gew.-% einem oder mehreren bei Normaltemperatur vollständig mit Wasser mischbaren, jedoch mit einem Benzinkohlenwasserstofflösemittel mit einem Siedebereich von 80 bis 110°C und einem Aromatengehalt von maximal 5 % nicht mischbaren Lösemittel, welches eine Verdunstungszahl von über 60 aufweist,

(C) 1 bis 30 Gew.-% einer oder mehrerer farb- und/oder effektgebenden Komponenten,

(D) 0 bis 20 Gew.-%, vorzugsweise 5 bis 15 Gew.-% einer oder mehrerer im Milieu der Lackpräparation stabilen Dispersion auf Basis von Vinylpolymeren, Polykondensaten oder Polyadditionsharzen und

(E) 0 bis 20 Gew.-%, vorzugsweise 3 bis 12 Gew.-% eines oder mehrerer teilweise oder Vollständig veretherter Amino-Formaldehyd-Kondensate.

2. Überzugsmittel nach Anspruch 1, dadurch gekennzeichnet, daß die Komponente (A) ein Lösungspolymerisat, hergestellt in einem der Lösemittel der Komponente (B) ist.

3. Verwendung der Überzugsmittel nach den Ansprüchen 1 und 2, in Kombination mit Klarlackdeckschichten für vorzugsweise Metallpigmente enthaltende Zweischichtdecklacke.

## Claims

1. Water dilutable coating compositions for use in base coats for wet-on-wet application of finishes, containing pigments and optionally extenders, auxiliary organic solvents and normal paint additives, particularly for base coats containing metallic pigments, based on acrylic copolymers, characterised in that the base coat contains

(A) 10 - 40 % b.w., preferably 15 - 30 % b. w. of at least one copolymer with a glass transition temperature of between -55°C and +25°C, preferably between -50°C and 0°C, and consists of

(Aa) 40 - 60 % b.w. of vinyl and vinylidene compounds carrying no other functional groups besides the alpha, beta-ethylenically unsaturated group,

(Ab) 10 - 30 % b.w. of hydroxy alkyl esters of (meth)acrylic acid, maleic acid or fumaric acid, and/or

(Ac) 30 - 40 % b.w. of N-methylol(meth)acrylic acid amide,

(Ad) 2 - 17 % b.w. of (meth)acrylic acid amide,

(Ae) 0 - 8 % b.w. of alkoxymethylated N-methylol-(meth)acrylic acid amide,

(Af) 2 - 8 % of alpha, beta-ethylenically unsaturated monocarboxylic acids, preferably (meth)acrylic acid and

(Ag) 0 - 0.8 % b.w. of an alpha, beta-ethylenically unsaturated compound, preferably divinylbenzol,

with the condition that a 60 % solution of the copolymer in ethanol, after neutralisation of the carboxy groups with ammonia to a pH-value of 7.2 to 7.5 (measured on a 20 % solution in water) can be clearly diluted with water, or with a slight turbidity only, to a solids content of 20 % and that the solution, on dilution with water to a solids content of from 25 - 40 % has a maximum viscosity of over 5 Pa.s.,

| | | |
|---|---|---|
| (B) 5 - 40 % | b.w., preferably 15 - 35 % b.w. of a mixture of | |
| (Ba) 20 - 80 % | b.w. of one or more solvents with an evaporation number (DIN 53 179) of below 30, and | |
| (Bb) 20 - 80 % | b.w. of one or more solvents with an evaporation number of over 60, completely miscible with water at ambient temperature, but not miscible with benzine hydrocarbon solvents, with a boiling range of from 80 to 110° C and a content of aromatic hydrocarbons of max. 5 %, | |
| (C) 1 - 30 % | b.w. of one or more colouring and/or effect imparting components, | |
| (D) 0 - 20 % | b.w., preferably 5 - 15 % b.w. of one or more dispersions stable in the paint composition, based on vinyl polymers, polycondensates or polyaddition resins, and | |
| (E) 0 - 20 % | b.w., preferably 3 - 12 % b.w. of one or more partially or totally etherified amine-formaldehyde-condensates. | |

2. Coating compositions according to claim 1, characterised in that component (A) is a solution polymer produced in one of the solvents of component (B).

3. Use of the coating compositions of claims 1 and 2, in combination with clear top coats, preferably for metal pigments containing base coat/top coat finishes.

**Revendications**

1. Agents de revêtement diluables à l'eau pour l'utilisation dans des couches de fond ("Base coats") contenant des pigments ainsi que le cas échéant des charges, des solvants auxiliaires organiques et des adjuvants usuels de laquages de finition à deux couches, en particulier dans des couches de fond contenant des pigments métalliques, à base de copolymères d'acrylate, caractérisés en ce que la couche de fond se compose de

| | |
|---|---|
| (A) 10 à 40 % | en poids, de préférence 15 à 30 % en poids, d'au moins un copolymère préparé par un procédé de polymérisation en solution et diluable à l'eau après neutralisation au moins partielle avec une amine, de préférence une alcanolamine tertiaire, ayant une température de transition vitreuse comprise entre -55°C et +25°C, de préférence entre -50°C et 0°C, et qui est constitué de |
| (Aa) 40 à 60 % | en poids de composés vinyliques ou vinylidéniques qui ne présentent, en dehors de la double liaison $\alpha,\beta$-éthylénique, aucun autre groupe fonctionnel, |
| (Ab) 30 à 40 % | en poids d'esters d'hydroxyalkyle en $C_2$ à $C_4$ de l'acide (méth)acrylique, et/ou |
| (Ac) | de N-méthylol(méth)acrylamide, ainsi que de |
| (Ad) 2 à 17 % | en poids de (méth)acrylamide, |
| (Ae) 0 à 8 % | en poids de N-méthylol(méth)acrylamide alcoxyméthylé |
| (Af) 2 à 8 % | en poids d'acides monocarboxyliques à insaturation $\alpha,\beta$-éthylénique, de préférence d'acide (méth)acrylique et |
| (Ag) 0 à 0,8 % | en poids d'un composé di-$\alpha,\beta$-insaturé, de préférence le divinylbenzène, |

sous réserve qu'une solution à 60 % en poids du copolymère dans de l'éthanol, après neutralisation des groupes carboxyle avec de l'ammoniaque jusqu'à obtention d'un pH de 7,2 à 7,5 (mesuré en solution aqueuse à 20 %), soit diluable à l'eau en restant limpide ou en ne se troublant que légèrement, jusqu'à une teneur en matières solides de 20 %, et que la solution, lors de la dilution avec de l'eau, pour une teneur en matières solides de 25 à 40 %, présente un maximum de viscosité supérieur de 5 Pa.s,

| | |
|---|---|
| (B) 5 à 40 % | en poids, de préférence 15 à 35 % en poids d'un mélange de |
| (Ba) 20 à 80 % | en poids d'un ou plusieurs solvants ayant un indice d'évaporation (selon DIN 53 170) inférieur à 30 et |
| (Bb) 20 à 80 % | en poids d'un ou plusieurs solvants complètement miscibles à l'eau à la température ambiante, mais non miscibles avec un solvant d'hydrocarbure benzénique ayant un domaine d'ébullition de 80 à 110°C et une teneur en hydrocarbures aromatiques de 5 % au maximum, qui présentent un indice d'évaporation supérieur à 60, |
| (C) 1 à 30 % | en poids d'un ou plusieurs constituants donnant une couleur et/ou un effet, |
| (D) 0 à 20 % | en poids, de préférence 5 à 15 % en poids d'une ou plusieurs dispersions stables dans le milieu de la préparation de laque à base de polymères vinyliques, de polycondensats ou de résines de polyaddition et |
| (E) 0 à 20 % | en poids, de préférence 3 à 12 % en poids d'un ou plusieurs condensats amino-formaldéhyde partiellement ou complètement éthérifiés. |

2. Agents de revêtement suivant la revendication 1, caractérisés en ce que le constituant (A) est un polymère préparé par polymérisation en solution dans un des solvants du constituant (B).

3. Utilisation des agents de revêtement suivant les revendications 1 et 2 en combinaison avec des couches de finition de laque transparente pour des laques de finition en deux couches contenant de préférence des pigments métalliques.